(19) **Europäisches Patentamt / European Patent Office / Office européen des brevets**

(11) **EP 1 960 410 B1**

(12) **FASCICULE DE BREVET EUROPEEN**

(45) Date de publication et mention de la délivrance du brevet:
**03.03.2010 Bulletin 2010/09**

(21) Numéro de dépôt: **06841859.9**

(22) Date de dépôt: **05.12.2006**

(51) Int Cl.:
*C07F 15/02* (2006.01)  *B82B 1/00* (2006.01)
*G02F 1/01* (2006.01)  *G11B 7/24* (2006.01)

(86) Numéro de dépôt international:
**PCT/FR2006/002651**

(87) Numéro de publication internationale:
**WO 2007/065996 (14.06.2007 Gazette 2007/24)**

(54) **NANOPARTICULES D'UN COMPOSE A TRANSITION DE SPIN**

NANOPARTIKEL EINER SPIN-ÜBERGANGSVERBINDUNG

NANOPARTICLES OF A SPIN TRANSITION COMPOUND

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **08.12.2005 FR 0512476**

(43) Date de publication de la demande:
**27.08.2008 Bulletin 2008/35**

(73) Titulaire: **Centre National de la Recherche Scientifique**
**75016 Paris (FR)**

(72) Inventeurs:
• **LETARD, Jean-François**
**F-33610 Canejan (FR)**
• **NGUYEN, Olivier**
**F-33125 Hostens (FR)**
• **DARO, Nathalie**
**F-33600 Pessac (FR)**

(74) Mandataire: **Sueur, Yvette et al**
**Cabinet Sueur & L'Helgoualch**
**Le Centralis**
**63 avenue du Général Leclerc**
**92340 Bourg-la-Reine (FR)**

(56) Documents cités:
**EP-A- 0 666 561    EP-A- 0 745 986**

**Description**

La présente invention concerne un matériau constitué par des particules ayant des dimensions nanométriques comprenant essentiellement un composé à transition de spin, un procédé pour la préparation dudit matériau, ainsi que diverses applications du matériau.

Il est connu d'utiliser des composés qui présentent une transition de spin pour diverses applications, notamment pour le stockage d'information. De tels composé peuvent être notamment des complexes de coordination contenant un ou plusieurs centres métalliques ayant une configuration $3d^4$, $3d^6$ ou $3d^7$, un ou plusieurs ligands azotés, et un ou plusieurs anions, tels que décrits par exemple dans EP-0 543 465, EP-0 666 561, EP-0 745 986 et EP-0 842 988.

EP-0 543 465 décrit un procédé de préparation de composés à transition de spin et l'utilisation pour le stockage d'information. Le procédé consiste à mettre en présence d'une part le ligand et d'autre part un sel de fer dans une solution acide, à laisser réagir pour obtenir un précipité, et en récupérer le précipité sous forme de poudre. Pour l'utilisation pour le stockage de donnée, le complexe obtenu est préalablement réduit en poudre, pour être déposé sur un support par diverses méthodes. Les composés cités répondent à l'une des formules suivantes :

- $FeL_3(NO_3)_2$ dans laquelle L est un ligand du type 1,2,4-triazole ou 4-amino-1,2,4-triazole associé à l'anion $NO_3^-$ ;
- **Fe (ATP)$_{2,5}$Cl$_2$**, dans laquelle le ligand ATP est le 4-amino-1,2,4-triazole associé à Fe(II) et à Cl- ;
- $Fe(TP)_2Cl_2$ dans laquelle le ligand TP est le 1,2,4-triazole, associé à Cl- ;
- [Fe(2-aminométhylpyridine)$_3$]Cl$_2$EtOH, EtOH étant l'éthanol
- [Fe(1, 10-phénanthroline)$_2$] (NCS)$_2$
- [Fe(1-propyltétrazole)$_6$] (BF$_4$)$_2$
- des complexes d'un métal M associé à un mélange de plusieurs ligands (choisis parmi R-Trz, les amines NL$_2$ et les triazolates Trz-, M étant Fe(II), Fe(III) ou Co(II), R-Trz étant un triazole portant un substituant R, R et L étant un alkyle ou H), et à un anion choisi parmi $BF_4^-$, $ClO_4^-$, $CO_3^{2-}$, Br$^-$, Cl$^-$, le complexe contenant en outre une quantité définie d'eau.

A l'exception du [Fe(1,10-phénanthroline)$_2$(NCS)$_2$], l'ensemble de ces complexes est de couleur rose dans l'état bas spin (BS), et blanc dans l'état haut spin (HS). La transition est provoquée par chauffage ou refroidissement et a lieu entre -20°C et 100°C. Ils présentent un phénomène d'hystérésis pouvant aller de quelques degrés à quelques dizaines de degrés.

EP-0 666 561 décrit des composés à transition de spin, qui répondent à la formule Fe(II)(H-Trz)$_3$(X)$_2$ dans laquelle Trz est le 1,2,4-triazole, (X)$_2$ représente l'anion (BF$_4^-$)$_2$, (ClO$_4^-$)$_2$, (Br$^-$)$_2$, (Cl$^-$)$_2$ ou (CO$_3^{2-}$). Ces composés présentent deux phases cristallines ayant chacune des transitions de spin associées à un changement de couleur (blanc/rose) et dont les températures $T_{1/2}\downarrow$ et $T_{1/2}\uparrow$ sont, respectivement, inférieures et supérieures à la température ambiante. Le procédé de préparation est analogue à celui décrit dans EP-0 543 465 ci-dessus.

EP-0 745 986 décrit des composés répondant à une formule analogue à celle des composés de EP-0 543 465, dans laquelle M est un ion métallique en configuration d5, d6 ou d7, le ligand est un dialkylaminotriazole, l'anion comporte un groupe sulfitoaryle, sulfitoalkyle, sulfito halogénure d'aryle ou d'alkyle. Ces composés particuliers ont une amplitude d'hystérésis supérieure à 70°C, et une région de bistabilité centrée exactement autour de la température ambiante. Lesdits composés sont roses à l'état BS et blancs à l'état HS. Le procédé de préparation des composés décrit de manière très brève est analogue à celui décrit dans EP-0 543 465 ci-dessus.

EP-0 842 988 décrit des composés chimiques à transition de spin et leur utilisation dans des dispositifs d'affichage de dépassement de seuil de température. Les composés sont formés par un réseau constitué par des molécules formées chacune par un complexe métal-ligand et par un anion, et ils comprennent au moins une molécule d'eau liée au ligand par liaison hydrogène. Le métal est choisi parmi ceux qui ont une configuration d4, d5, d6 ou d7. Le ligand est le 1,2,4-triazole portant un substituant R comprenant un groupe OH. Les anions sont des dérivés du tosylate et du nitrate. Les composés répondant à cette définition ont une température T1/2$\uparrow$ comprise entre 80 et 95°C et T1/2$\downarrow$ de -170°C. Ils peuvent être utilisés notamment dans des dispositifs destinés à détecter une température de stockage accidentellement élevée (de l'ordre de 80°C) dans des bâtiments de stockage ou des véhicules de transport. Les composés sont préparés en mélangeant un précurseur du centre métallique et un précurseur du ligand, à température ambiante, et en éliminant le solvant par filtration après l'obtention d'un précipité. Le composé est obtenu sous forme pulvérulente.

Les composés obtenus selon l'art antérieur ci-dessus sont de taille micrométrique et doivent être broyés pour être utilisables comme pigments thermochromes dans des films de polymère ayant une épaisseur micrométrique ou comme support de données dans des microsystèmes, les supports devant rester transparents.

Le but de la présente invention est de fournir un procédé pour l'obtention directe de nanoparticules de complexes de Fer, d'un ligand triazole et d'au moins un anion.

La présente invention a par conséquent pour objet un matériau sous forme de nanoparticules de complexes, un procédé pour l'obtention dudit matériau, ainsi que des applications dudit matériau.

Le matériau selon la présente invention est constitué par des particules nanométriques comprenant essentiellement un composé répondant à la formule

$$\left[(Fe_{1-y}M_yL_3)_wL_3\right]\left[X_{\frac{2}{x}(1-\frac{z}{x'})}Y_{2\frac{z}{x'}}\right]_w \quad (I)$$

dans laquelle :

- L représente un ligand 1,2,4-triazole portant un substituant R sur l'azote en position 4 ;
- X est un anion ayant la valence x, $1 \leq x \leq 2$ ;
- Y est un anion différent de X ayant la valence x', $1 \leq x' \leq 2$ ;
- R est un groupe alkyle ou un groupe $R^1R^2N$- dans lequel $R^1$ et $R^2$ représentent chacun indépendamment de l'autre H ou un radical alkyle ;
- M est un métal ayant une configuration $3d^4$, $3d^5$, $3d^6$ ou $3d^7$, autre que Fe ;
- $0 \leq y \leq 1$ ;
- $\leq z \leq 2$ ;
- $3 \leq w \leq 1500$.

Dans la suite du texte, le ligand "1,2,4-triazole portant un substituant R sur l'azote en position 4" est désigné indifféremment par L ou par R-Trz

Par particules "nanométriques", on entend des particules qui ont un diamètre moyen entre 1 nm et 500 nm, plus particulièrement entre 1 et 100 nm. Lorsque w est respectivement 3, 300 ou 1500, la dimension moyenne des particules est respectivement d'environ 1 nm, 100 nm ou 500 nm.

Un composé qui répond à la définition ci-dessus est capable de changer d'état de spin de manière réversible lors d'un réchauffement et lors d'un refroidissement, avec un changement de couleur associé à chaque changement de spin.

Lorsqu'un substituant R est un groupe alkyle, il est choisi de préférence parmi les groupes alkyles ayant de 1 à 8 atomes de carbone, plus particulièrement de 1 à 4 atomes de carbone. Lorsqu'un substituant R est un groupe $R^1R^2N$-, $R^1$ et $R^2$ représentent indépendamment l'un de l'autre de préférence H ou un groupe alkyle ayant de 1 à 8 atomes de carbone, plus particulièrement de 1 à 4 atomes de carbone.

Chacun des anions X et Y peut être un anion monovalent ou un anion divalent. L'anion monovalent est choisi parmi $BF_4^-$, $ClO_4^-$, $Br^-$, $Cl^-$ et $NO_3^-$. L'anion divalent est choisi de préférence parmi $SO_4^{2-}$ et $CO_3^{2-}$ Le choix des anions permettant de contrôler la transition de spin (notamment le caractère abrupt, la présence d'hystérésis et la position de la transition).

Dans un mode de réalisation particulier, y = 0 et z = 0, et le matériau constituant les nanoparticules répond à la formule $[(FeL_3)_wL_3][X_{2/x}]_w$ .

Dans un autre mode de réalisation, $y \neq 0$ et z = 0. M joue alors le rôle de dopant du phénomène de transition de spin du composé $[(Fe_{1-y}M_yL_3)_wL_3]$ $[X_{2/x}]_w$. Une augmentation de y diminue le caractère abrupt de la transition et l'intensité de la couleur rose correspondant à l'état de bas spin. Comme exemple de métal M, on peut citer les ions Zinc (II), Magnanèse(II), Nickel(II), et Cobalt (II) .

Dans un mode de réalisation particulier, $z \neq 0$. Le choix des anions X et Y permet d'ajuster la température de transition de spin et de jouer sur le caractère abrupt de la transition de spin. Comme exemple de mélange d'anions, on peut citer, le couple $BF_4$ et $NO_3$, le couple Br et $NO_3$, le couple Cl et $NO_3$.

Dans un autre mode de réalisation, les nanoparticules de complexe sont enrobées par un film de silice.

Les caractéristiques indiquées pour les différents modes de réalisation peuvent bien entendu exister seules dans un matériau, ou sous forme d'une combinaison d'au moins deux d'entre elles.

Le matériau proposé est obtenu à partir d'une solution de sel de Fe(II) et éventuellement d'un précurseur du métal M dans un solvant ou un mélange de solvants, et d'une solution de ligand R-Trz dans un solvant ou un mélange de solvants.

Dans un premier mode de réalisation, la préparation est effectuée par une synthèse en micelle inverse. Le procédé comprend les étapes suivantes :

a) préparation d'une émulsion du type eau dans huile par addition sous agitation énergique d'une composition de type huile à propriétés tensioactives à une solution aqueuse d'au moins un sel de fer contenant de l'acide ascorbique ;
b) préparation d'une émulsion du type eau dans huile par addition d'une composition de type huile à propriétés tensioactives à une solution aqueuse d'un ligand sous agitation énergique ;

c) mélange des deux émulsions, puis nouvelle agitation énergique, pendant une durée de 1 à 10 min ;

d) précipitation des nanoparticules par addition d'un solvant qui ne modifie pas la structure des nanoparticules, et qui dénature l'émulsion, par exemple l'éther éthylique ;

e) extraction du précipité par plusieurs cycles "lavage par ledit solvant / centrifugation", puis évaporation dudit solvant.

La composition du type huile à propriétés tensioactives peut être soit une composition obtenue par addition d'un tensioactif à une huile, soit un produit unique ayant à la fois des propriétés de tensioactif et d'huile (tel que les produits commercialisés sous les dénominations Lauropal ®, Tergitol ® ou Ifralan ®).

La dimension des particules formées peut être contrôlée notamment par le choix de la température de réaction et/ou de la durée de mise en contact des deux microémulsions préparées respectivement au cours des étapes a) et b). Toutes choses étant égales par ailleurs, une augmentation de la durée et/ou de la température favorise une augmentation de la dimension des particules finales.

Dans un autre mode de réalisation, la préparation est effectuée par une synthèse en microémulsion. Le procédé comprend les étapes suivantes :

a. préparation d'une microémulsion du type eau dans huile par addition d'une solution aqueuse d'au moins un sel de fer, à une solution d'un tensioactif dans une huile (n-heptane par exemple), et passage aux ultrasons jusqu'à l'obtention d'une solution limpide ;

b. préparation d'une microémulsion du type eau dans huile par addition d'une solution aqueuse de ligand à une solution d'un tensioactif dans une huile et passage aux ultrasons jusqu'à l'obtention d'une solution limpide ;

c. mélange des deux microémulsions et traitement du mélange par ultrasons jusqu'à l'obtention d'une solution limpide ;

d. précipitation des nanoparticules par addition d'un solvant qui ne modifie pas la structure des nanoparticules, mais qui dénature l'émulsion, par exemple l'éthanol.

Les proportions de solvant, de tensioactif et d'huile requises pour obtenir une microémulsion sont déterminées à partir du diagramme de phase du mélange ternaire. Le diagramme de phase ternaire est disponible dans la littérature pour de nombreux ensembles solvant/huile/tensioactif. La détermination d'un diagramme ternaire particulier est à la portée de l'homme de métier.

Dans les deux modes de mise en oeuvre de la préparation des matériaux de l'invention :

- lorsque $y \neq 0$ et $z = 0$, on prépare une solution aqueuse de sel de M que l'on ajoute à la solution aqueuse de sel de Fe, avant la mise en contact avec le mélange "tensioactif+huile" ;
- lorsque $z \neq 0$ et $y = 0$, on prépare une solution aqueuse contenant un sel de Fe de l'un des anions et un sel de Fe de l'autre anion, avant la mise en contact avec le mélange "tensioactif+huile ;
- lorsque $y \neq 0$ et $z \neq 0$, on prépare une solution contenant au moins un sel de Fer de l'un des anions et au moins un sel de M de l'autre anion.

Dans les deux modes de mise en oeuvre du procédé de préparation des matériaux de l'invention, lorsque le matériau recherché est constitué de nanoparticules enrobées de silice, on ajoute un dérivé silylé au milieu réactionnel, avant dénaturation de la micelle ou de la micro-émulsion (c'est-à-dire avant l'étape d) dans les deux modes de réalisations décrits ci-dessus). Comme exemple de dérivé silylé, on peut citer le tétraéthoxysilane, le n-octadécyl-triéthoxysilane, et le n-octyl-triéthoxysilane.

Le matériau sous forme de nanoparticules de la présente invention est particulièrement utile comme pigment thermochrome. A titre d'exemple, dans le domaine de la plasturgie, l'application d'un vernis est souvent réalisée sous forme de couche de quelques microns d'épaisseur. Les nanoparticules proposées peuvent être incorporées directement dans une matrice polymère qui sera appliquée sur un substrat sous forme d'une couche d'épaisseur micrométrique, alors que dans l'art antérieur, une étape préliminaire de broyage de micro-particules de matériau à transition de spin est nécessaire.

Le matériau sous forme de nanoparticules selon l'invention est en outre utile pour le stockage de données. Les nanoparticules constituent une véritable "mémoire moléculaire" utilisant le phénomène de transition de spin. Un bit d'information peut être ainsi stocké dans chaque nanoparticule. La parfaite transparence d'un disque constitué d'une matrice polymérique dopée par ces nanoparticules bistables permet d'envisager des applications dans le domaine du stockage de données en volume (holographie).

La modification importante de couleur (c'est-à-dire du spectre d'absorption) associée au phénomène de transition de spin se traduit par un changement de l'indice de réfraction du matériau entre l'état bas spin et l'état haut spin. Les indices de réfraction respectifs des deux états peuvent être adaptés pour rendre le milieu transparent lorsque les molécules sont dans l'état HS. A haute énergie optique, les effets photo-induits peuvent provoquer la commutation de l'état HS à l'état BS, et donc induire une variation de l'indice de réfraction. Le milieu initialement transparent devient alors opaque. Ce phénomène permet l'utilisation des nanoparticules dans le domaine des limitateurs optiques, ainsi que comme porte-optique pour le stockage de données.

Des nanoparticules d'un matériau dont la réponse magnétique passe avec la température, d'une forme diamagnétique (état BS) à paramagnétique (état HS), peuvent être utilisées pour l'élaboration d'agents de contraste thermosensibles pour les procédés de thermothérapie. Les nanoparticules, placées in situ, permettraient de suivre le franchissement d'un seuil de température, tel que celui qui discrimine les cellules saines des cellules cancéreuses. En effet, l'image par résonance magnétique (IRM) d'un milieu contenant les nanoparticules est normale dans le cas des nanoparticules dans l'état bas spin diamagnétique et fortement distordue dans le cas d'un état haut spin paramagnétique.

La présente invention est décrite plus en détails à l'aide des exemples qui suivent, qui sont donnés à titre d'illustration et auxquels l'invention n'est bien entendu pas limitée.

## Exemple 1

Un matériau a été préparé par une synthèse en émulsion inverse selon le mode opérationnel suivant.

Dans un ballon A contenant $m_1$ g d'un sel de Fer (II) et $m_2$ g d'acide ascorbique, on ajoute $m_3$ g d'eau.

Dans un ballon B contenant $m_4$ g d'4-amino-1,2,4-triazole ($NH_2Trz$), on ajoute $m_3$ g d'eau.

Dans les deux ballons, les composés sont dissous par agitation mécanique, dans un bain-marie d'eau à 50°C. Ensuite, on ajoute $m_5$ g de tensioactif(Lauropal 205 ou Ifralan D205, ou Tergitol qui jouent à la fois le rôle de surfactant et de phase huileuse).

Les ballons A et B sont ensuite passés au Vortex, qui génère une agitation mécanique intense favorable à la formation de micelles. Les deux micelles inverses ainsi obtenues sont thermodynamiquement stables pendant quelques minutes. Le contenu du ballon B est rapidement ajouté au contenu du ballon A, puis l'ensemble est passé au Vortex pendant quelques minutes pour favoriser l'échange micellaire.

Les particules sont finalement obtenues par une addition d'éther diéthylique qui a pour effet de dénaturer la micelle inverse. L'éther diéthylique solubilise le surfactant et non le complexe formé. Après centrifugation et prélèvement de la phase liquide, l'opération de lavage est répétée 3 à 4 fois supplémentaires jusqu'à ce que le liquide surnageant soit parfaitement limpide.

Le Tableau 1 résume les conditions particulières dans lesquelles plusieurs échantillons ont été préparés.

**Tableau 1**

| Ech. | Ballon A | | | | Ballon B | | |
|---|---|---|---|---|---|---|---|
| 1 | Sel de Fe(II) $m_1$ | Eau $m_3$ | Acide ascorbique $m_2$ | Tensioactif $m_5$ | Ligand $m_4$ | Eau $m_3$ | Tensioactif $m_5$ |
| 2 | $FeBr_2$ 0,23 g | 0,8 g | 0,03 g | Ifralan 4,2 g | $NH_2Trz$ 0,27 g | 0,8 g | Ifralan 4,2 g |
| 3 | $FeCl_2$ 0,21 g | 0,8 g | 0,03 g | Ifralan 4,2 g | $NH_2Trz$ 0,27 g | 0,8 g | Ifralan 4,2 g |
| 4 | $Fe(BF_4)_2$ 0,36 g | 0,8 g | 0,03 g | Ifralan 4,5 g | $NH_2Trz$ 0,27 g | 0,8 g | Ifralan 4,5 g |
| 5 | $Fe(NO_3)_2$ 2,3 mL | | 0,03 g | Ifralan 8,9 g | $NH_2Trz$ 0,27 g | 2,3 g | Ifralan 8,9 g |
| ** $Fe(NO_3)_2$, (sel non commercial) est obtenu en solution dans l'eau par mélange d'une solution aqueuse de $FeSO_4$ (1,485 g dans 2,5 mL) contenant de l'acide ascorbique et d'une solution aqueuse de $Ba(NO_3)_2$ (1,4 g dans 7 mL) suivi d'une élimination du précipité de $BaSO_4$ par filtration. Un volume de cette solution est prélevée pour préparer les nanoparticules de $Fe(NH_2Trz)_3(NO_3)_2$. | | | | | | | |

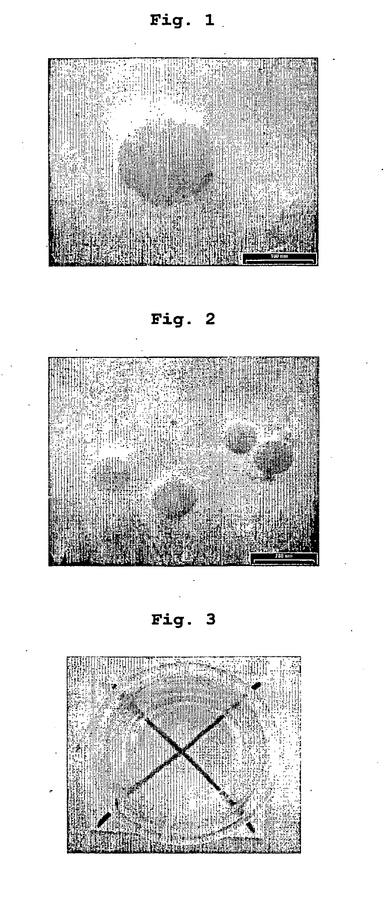

Les figures 1, 2 et 3 représentent des clichés MET des nanoparticules de complexe $[Fe(NH_2trz)_3](Br)_2$ obtenues dans l'essai n° 1. Les clichés des figures 1 et 2 montrent une structuration très régulière des nanoparticules sous forme sphérique. Cette structure résulte du fait que la réaction de synthèse est confinée dans des nano-gouttelettes. La dimension des particules est de l'ordre de 100 nm, qui correspond typiquement à une valeur de 300 pour w dans la formule (I). La figure 3 met en évidence la transparence d'un polymère dopé avec des particules nanométriques.

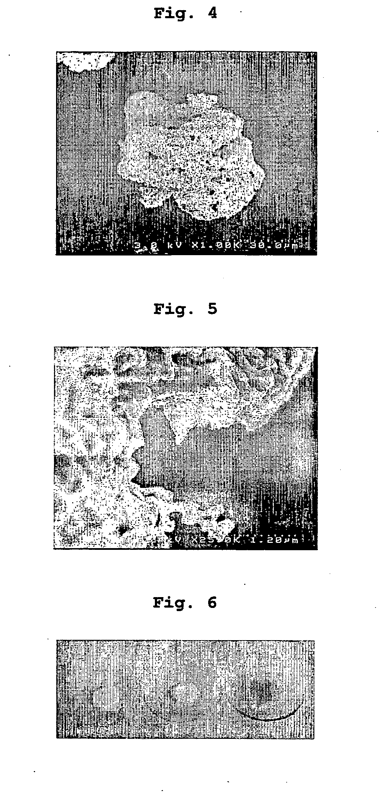

A titre comparatif, un complexe a été préparé selon le procédé de l'art antérieur, à partir des mêmes précurseurs. Le mélange des précurseurs a été effectué à température ambiante, et le précipité formé a été séparé par filtration. Les figures 4, 5 et 6 représente des clichés MET du précipité obtenu. Les figures 4 et 5 montrent que les particules à transition de spin synthétisées par le procédé de l'art antérieur n'ont pas une structuration régulière. Les grains sont irréguliers et ont une dimension de l'ordre de 60 $\mu$m. La figure 6 montre l'opacité engendrée par l'introduction de particules micrométriques (même dans de faibles proportions) dans un polymère structurant (de type PVA) à l'origine transparent.

## Exemple 2

Un matériau a été préparé par une synthèse en micro-émulsion dans les conditions suivantes.

On a ajouté 0,648 mL d'une solution 0,5 M de $FeBr_2$ dans l'eau, puis on a ajouté cette solution à une solution de 1,6 g de bis(2-éthylhexyle) sulfosuccinate de sodium (AOT) dans 46 mL de n-heptane. Le mélange ainsi obtenu a été soumis à des ultrasons jusqu'à obtention d'une solution limpide.

On a ajouté 0,648 mL d'une solution 1,5 M de $NH_2Trz$ dans l'eau, puis on a ajouté cette solution à une solution de 1,6 g de AOT dans 46 mL de n-heptane. Le mélange ainsi obtenu a été soumis à des ultrasons jusqu'à obtention d'une solution limpide.

Les deux solutions limpides ont ensuite été mélangées et ce nouveau mélange a été soumis à des ultrasons jusqu'à obtention d'une solution finale limpide. Des analyses par diffusion de la lumière ont montré des particules de l'ordre de 3 nm, qui correspond typiquement à une valeur de 9 pour w dans la formule (I). La solution limpide est rose dans l'état bas-spin, blanche dans l'état haut-spin. Cette modification réversible de la couleur du rose au blanc par changement de la température démontre que le phénomène de transition de spin se produit à l'échelle du nanomatériau in situ.

Les particules sont finalement obtenues par une addition d'éthanol qui a pour effet de dénaturer la micro-émulsion inverse. L'éthanol solubilise le surfactant et non le complexe formé. Après centrifugation et prélèvement de la phase liquide, l'opération de lavage est répétée 3 à 4 fois jusqu'à ce que le liquide surnageant soit parfaitement limpide.

## Exemple 3

Des nanoparticules ont été préparées à partir d'un précurseur de Fe et d'un précurseur de M par une synthèse en émulsion inverse dans les conditions de l'essai n° 3 donné dans le tableau 1, en introduisant dans la ballon A 0,116 g de $FeCl_2$ et 0,124 g de $ZnCl_2$ au lieu de 0,21 g de $FeCl_2$. On a obtenu des nanoparticules formées par le complexe $Fe_{0,5}Zn_{0,5}Cl_2$. La dimension des particules est de l'ordre de 100 nm, soit typiquement un w de 300.

## Exemple 4

On a reproduit le mode opératoire de l'exemple 2, en remplaçant la solution de $FeBr_2$ par une solution de $FeCl_2$ et de $ZnCl_2$. On a obtenu des nanoparticules formées par le complexe $Fe_{0,5}Zn_{0,5}Cl_2$. La dimension des particules est de l'ordre de 100 nm, soit typiquement un w de 300.

## Exemple 5

On a reproduit le mode opératoire de l'exemple 1 dans les conditions suivantes, en dissolvant $Fe(BF_4)_2$ dans la solution de $Fe(NO_3)_2$.

| Ballon A | | | | Ballon B | | |
|---|---|---|---|---|---|---|
| Sel de Fe(II) $m_1$ | Eau $m_3$ | Acide ascorbique $m_2$ | Tensioactif $m_5$ | Ligand $m_4$ | Eau $m_3$ | Tensioactif $m_5$ |
| $Fe(NO_3)_{1,7}$ $(BF_4)_{0,3}$ $Fe(NO_3)$ 1,96 mL $Fe(BF_4)_2$ 0,054 g | | 0,03 g | Ifralan 8,5 g | $NH_2Trz$ 0,27 g | 1,96 g | Ifralan 8,5 g |

On a obtenu des nanoparticules d'un complexe $[Fe(NH_2TrZ)_3(NO_3)_{1,7}(BF_4)_{0,3}]$. La dimension des particules est de l'ordre de 100 nm, soit typiquement un w de 300.

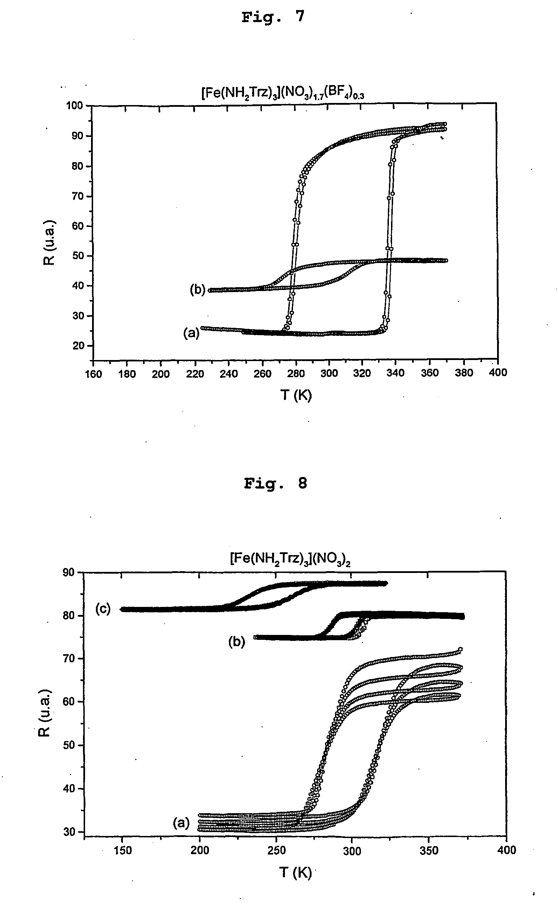

La Figure 7 montre l'évolution du signal de réflectivité R en fonction de la température T pour le complexe du présent exemple (courbe b) et pour le matériau de même formule obtenu en synthèse traditionnelle (courbe a).

**Exemple 6**

Un matériau a été préparé avec un enrobage de silice par une synthèse en micelles inverses selon le mode opératoire de l'exemple 1 mis en oeuvre avec le précurseur $FeBr_2$. La différence avec l'exemple 1 réside dans le fait que, après avoir mélangé les deux solutions micellaires et agité au Vortex pendant quelques minutes, on a ajouté 2 mL de tétraéthoxysilane (TEOS).

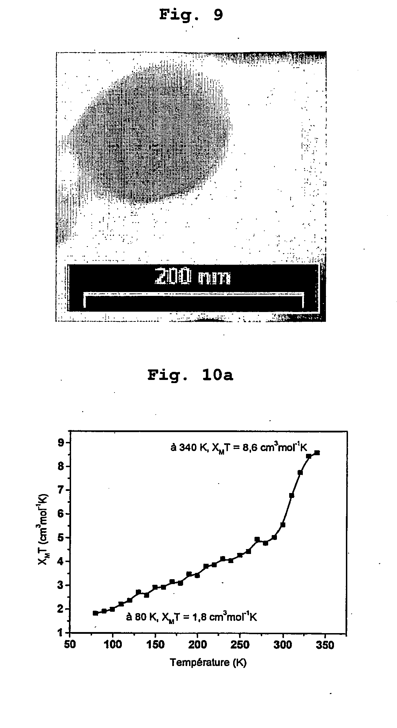

La figure 8 montre l'évolution de la réflectvité R en fonction de la température T pour le dérivé $Fe(NH_2Trz)_3$ $(NO_3)_2$ synthétisé par voie traditionnelle (a), par voie micellaire inverse (b) (essai n° 2 du tableau 1) et par voie micellaire inverse avec enrobage de silice (c). La Figure 9 représente le cliché MET d'un enrobage de silice autour d'une nano-particule à transition de spin. Cette coque de silice, de quelques nanomètres, se traduit par un enrobage diffus autour de la particule.

**Exemple 7**

On a préparé une solution de $m_1$ g de $FeBr_2$ dans 0,342 g d'eau, et une solution de 0,8 g d'AOT dans 23 mL de n-heptane, puis on a mélangé les deux solutions et on a soumis le mélange ainsi obtenu à des ultrasons jusqu'à obtention d'une solution limpide, dite solution A.

On a préparé une solution de $m_2$ g de $NH_2Trz$ dans 0,342 g d'eau, et une solution de 0,8 g de AOT dans 23 mL de n-heptane, puis on a mélangé les deux solutions et on a soumis le mélange ainsi obtenu à des ultrasons jusqu'à obtention d'une solution limpide, dite solution B.

Les solutions A et B ont ensuite été mélangées et ce nouveau mélange a été soumis à des ultrasons jusqu'à obtention d'une solution finale limpide. Les particules ont été obtenues selon le mode opératoire de l'exemple 2, par addition et lavage à l'éthanol.

Le tableau ci-dessous donne les quantités respectives $m_1$ et $m_2$ utilisées pour les échantillons.

| Echantillon | $m_1$ | $m_2$ |
|-------------|-------|-------|
| 7(1) | 0, 035 | 0,054 |
| 7(2) | 0,058 | 0,081 |
| 7(3) | 0,081 | 0,108 |

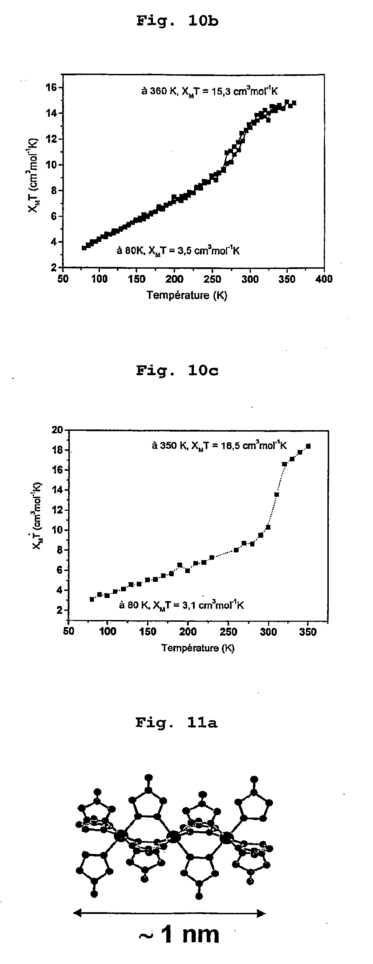

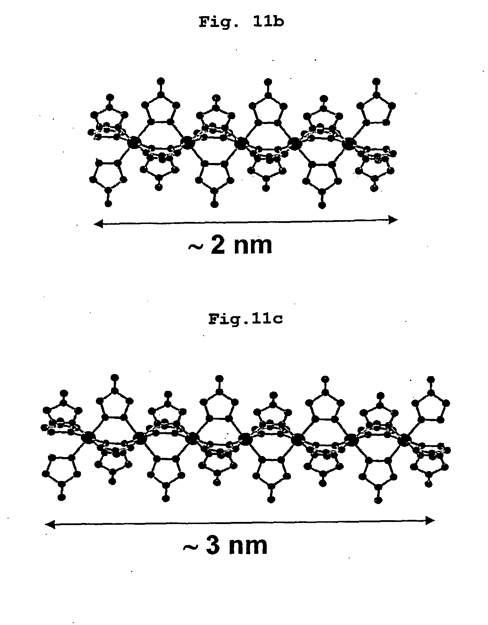

Les figures 10a, b et c montrent l'évolution du signal magnétique, exprimé en produit $\chi_M T$, respectivement pour les échantillons 7(1), 7(2) et 7(3). La susceptibilité magnétique molaire $\chi_M$, en $cm^3\ mol^{-1}$, multipliée par la température T, en degré K, est donnée en ordonnée et la température T, en degré K, est donnée en abscisse, pour les matériaux pour lesquels w = 3, 5 et 7. Les courbes confirment la présence d'une transition de spin graduelle pour les trois nanomatériaux autour de 300 K. Elles montrent aussi que la valeur magnétique à 350 K est conforme au produit $\chi_M T$ attendu pour un complexe contenant, dans l'état HS, respectivement, 3 atomes de Fe(II) (w = 3) pour l'échantillon 7(1), 5 atomes de Fe(II) (w = 5) pour l'échantillon 7(2) et 7 atomes de Fe(II) (w = 7) pour l'échantillon 7(3), confirmant ainsi la formule du complexe. Si l'on prend en compte la distance des liaisons impliquées dans ces complexes, la taille des nanoparticules w = 3 est de 1 nm, w = 5 de 2 nm et w = 7 de 3 nm. Les figures 11a, b et c représente les formules développées respectivement pour les échantillons 7(1), 7(2) et 7(3).

Les matériaux obtenus correspondent à la formule (I) dans laquelle dans laquelle y = 0, x = 1, z = 0 et L est $NH_2Trz$, c'est à dire à la formule

$$[(FeL_3)_wL_3][X_2]_w$$

Le tableau suivant donne la dimension des particules Φ (en nm), la valeur de w correspondante, et la valeur magnétique à 350 K $\chi_M T$ théorique (en $cm^3\ Kmol^{-1}$) .

| Echantillon | Φ | w | $\chi_M T$ |
|-------------|---|---|-----------|
| 7 (1) | 1 | 3 | 9 |
| 7 (2) | 2 | 5 | 15 |
| 7 (3) | 3 | 9 | 21 |

La figure 10 représente la formule développée de chacun des matériaux constituant les échantillons 7(1), 7(2) et 7 (3) .

**Revendications**

1. Matériau constitué par des particules nanométriques comprenant essentiellement un composé répondant à la formule

$$\left[\left(Fe_{1-y}M_yL_3\right)_wL_3\right]\left[X_{\frac{2}{x}\left(1-\frac{z}{x'}\right)}Y_{\frac{2z}{x'}}\right]_w$$

dans laquelle :

- L représente un ligand 1,2,4-triazole portant un substituant R sur l'azote en position 4 ;
- X est un anion ayant la valence x, $1 \le x \le 2$ ;
- Y est un anion différent de X ayant la valence x', $1 \le x' \le 2$ ;
- R est un groupe alkyle ou un groupe $R^1R^2N$- dans lequel $R^1$ et $R^2$ représentent chacun indépendamment de l'autre H ou un radical alkyle ;
- M est un métal ayant une configuration $3d^4$, $3d^5$, $3d^6$ ou $3d^7$, autre que Fe ;
- $0 \le y \le 1$ ;
- $0 \le z \le 2$ ;
- $3 \le w \le 1500$.

2. Matériau selon la revendication 1, **caractérisée en ce que** les particules ont un diamètre moyen entre 1 nm et 500 nm.

3. Matériau selon la revendication 1, **caractérisé en ce que** R est :

- un groupe alkyle ayant de 1 à 8 atomes de carbone, ou
- un groupe $R^1R^2N$- dans lequel $R^1$ et $R^2$ représentent indépendamment l'un de l'autre H ou un groupe alkyle ayant de 1 à 8 atomes de carbone.

4. Matériau selon la revendication 1, **caractérisé en ce que** chacun des anions X et Y représente indépendamment de l'autre un anion monovalent choisi parmi $BF_4^-$, $ClO_4^-$, $Br^-$, $Cl^-$ et $NO_3^-$, ou un anion divalent choisi parmi $SO_4^{2-}$ et $CO_3^{2-}$.

5. Matériau selon la revendication 1, répondant à l'une des formules $Fe(L)_3(X_{2/x})_2$ ou $Fe_{1-y}M_y(L)_3(X_{2/x})_2$.

6. Matériau selon la revendication 1, **caractérisé en ce que** M représente Zn, Mn, Ni ou Co.

7. Matériau selon la revendication 1, **caractérisé en ce que** les nanoparticules de complexe sont enrobées par un film de silice.

8. Procédé de préparation d'un matériau selon la revendication 1, **caractérisé en ce que** l'on mélange une solution de sel de Fe(II) et éventuellement d'un précurseur du métal M dans un solvant ou un mélange de solvants, et une solution de ligand L dans un solvant ou un mélange de solvants.

9. Procédé selon la revendication **8, caractérisé en ce qu'**il comprend les étapes suivantes :

a) préparation d'une émulsion du type eau dans huile par addition sous agitation énergique d'une composition de type huile à propriétés tensioactives à une solution aqueuse d'au moins un sel de fer contenant de l'acide ascorbique ;
b) préparation d'une émulsion du type eau dans huile par addition d'une composition de type huile à propriétés tensioactives à une solution aqueuse d'un ligand sous agitation énergique ;
c) mélange des deux émulsions, puis nouvelle agitation énergique, pendant une durée de 1 à 10 min ;
d) précipitation des nanoparticules par addition d'un solvant qui ne modifie pas la structure des nanoparticules, mais qui dénature l'émulsion ;
e) extraction du précipité par plusieurs cycles "lavage par ledit solvant / centrifugation", puis évaporation dudit solvant.

**10.** Procédé selon la revendication **9, caractérisé en ce que** la composition du type huile à propriétés tensioactives est une composition obtenue par addition d'un tensioactif à une huile, ou un produit unique ayant à la fois des propriétés de tensioactif et d'huile.

**11.** Procédé selon la revendication **8, caractérisé en ce qu'**il comprend les étapes suivantes :

a. préparation d'une microémulsion du type eau dans huile par addition d'une solution aqueuse d'au moins un sel de fer, à une solution d'un tensioactif dans une huile (n-heptane par exemple), et passage aux ultrasons jusqu'à l'obtention d'une solution limpide ;
b. préparation d'une microémulsion du type eau dans huile par addition d'une solution aqueuse de ligand à une solution d'un tensioactif dans une huile et passage aux ultrasons jusqu'à l'obtention d'une solution limpide ;
c. mélange des deux microémulsions et traitement du mélange par ultrasons jusqu'à l'obtention d'une solution limpide ;
d. précipitation des nanoparticules par addition d'un solvant qui ne modifie pas la structure des nanoparticules, mais qui dénature l'émulsion.

**12.** Procédé selon l'une des revendications **9** ou **11** pour la préparation d'un matériau constitué de nanoparticules d'un composé

$$\left[ \left( Fe_{1-y}M_yL_3 \right)_w L_3 \right] \left[ X_{2/x(1-z/x')} Y_{2z/x'} \right]_w$$

dans lequel $y \neq 0$ et $z = 0$, **caractérisé en ce que** l'on prépare une solution aqueuse de sel de M que l'on ajoute à la solution aqueuse de sel de Fe, avant la mise en contact avec le mélange "tensioactif+huile".

**13.** Procédé selon l'une des revendications **9** ou **11** pour la préparation d'un matériau constitué de nanoparticules d'un composé

$$\left[ \left( Fe_{1-y}M_yL_3 \right)_w L_3 \right] \left[ X_{2/x(1-z/x')} Y_{2z/x'} \right]_w$$

dans lequel $z \neq 0$ et $y = 0$, **caractérisé en ce que** l'on prépare une solution aqueuse contenant un sel de Fe de l'un des anions et un sel de Fe de l'autre anion, avant la mise en contact avec le mélange "tensioactif+huile.

**14.** Procédé selon l'une des revendications **9** ou **11** pour la préparation d'un matériau constitué de nanoparticules d'un composé

$$\left[ \left( Fe_{1-y}M_yL_3 \right)_w L_3 \right] \left[ X_{2/x(1-z/x')} Y_{2z/x'} \right]_w$$

dans lequel $y \neq 0$ et $z \neq 0$, **caractérisé en ce que** l'on prépare une solution contenant au moins un sel de Fer de l'un des anions et au moins un sel de M de l'autre anion.

**15.** Procédé selon l'une des revendications **9** ou **11** pour la préparation d'un matériau constitué de nanoparticules d'un composé

$$\left[(Fe_{1-y}M_yL_3)_wL_3\right]\left[X_{2/x(1-z/x')}Y_{2z/x'}\right]_w$$

dans lequel les nanoparticules sont enrobées de silice, **caractérisé en ce que** l'on ajoute un dérivé silylé au milieu réactionnel, avant l'étape d).

16. Procédé selon la revendication **15, caractérisé en ce que** le dérivé silylé est le tétraéthoxysilane, le n-octadécyl-triéthoxysilane, ou le n-octyl-triéthoxysilane.

17. Utilisation d'un matériau selon la revendication 1, comme pigment thermochrome, comme support pour le stockage de données, comme limitateur optique, **ou** comme porte-optique.

18. Agent de contraste pour la détection de cellules cancéreuses, **caractérisé en ce qu'**il comprend un matériau selon la revendication 1.

**Claims**

1. A material composed of nanometric particles essentially comprising a compound corresponding to the formula:

$$\left[(Fe_{1-y}M_yL_3)_wL_3\right]\left[X_{2/x(1-z/x')}Y_{2z/x'}\right]_w$$

in which:

- L represents a 1,2,4-triazole ligand carrying an R substituent on the nitrogen in the 4 position;
- X is an anion having the valency x, $1 \le x \le 2$;
- Y is an anion other than X having the valency x', $1 \le x' \le 2$;
- R is an alkyl group or an $R^1R^2N-$ group in which $R^1$ and $R^2$ represent, each independently of the other, H or an alkyl radical;
- M is a metal having a $3d^4$, $3d^5$, $3d^6$ or $3d^7$ configuration, other than Fe;
- $0 \le y \le 1$;
- $0 \le z \le 2$ ;
- $3 \le w \le 1500$.

2. The material as claimed in claim 1, **characterized in that** the particles have a mean diameter between 1 nm and 500 nm.

3. The material as claimed in claim 1, **characterized in that** R is :

- an alkyl group having from 1 to 8 carbon atoms, or
- an $R^1R^2N-$ group in which $R^1$ and $R^2$ represent, independently of one another, H or an alkyl group having from 1 to 8 carbon atoms.

4. The material as claimed in claim 1, **characterized in that** each of the anions X and Y represents, independently of the other, a monovalent anion chosen from $BF_4^-$, $ClO_4^-$, $Br^-$, $Cl^-$ and $NO_3^-$ or a divalent anion chosen from $SO_4^{2-}$ and $CO_3^{2-}$.

5. The material as claimed in claim 1, corresponding to one of the formulae $Fe(L)_3(X_{2/x})_2$ or $Fe_{1-y}M_y(L)_3(X_{2/x})_2$.

6. The material as claimed in claim 1, **characterized in that** M represents Zn, Mn, Ni or Co.

7. The material as claimed in claim 1, **characterized in that** the complex nanoparticles are coated with a silica film.

8. A process for the preparation of a material as claimed in claim 1, **characterized in that** a solution of Fe(II) salt and optionally of a precursor of the metal M in a solvent or a mixture of solvents is mixed with a solution of ligand L in a solvent or a mixture of solvents.

9. The process as claimed in claim 8, **characterized in that** it comprises the following stages:

a) preparation of an emulsion of the water-in-oil type by addition, with vigorous stirring, of a composition of oil possessing surfactant properties type to an aqueous solution of at least one iron salt comprising ascorbic acid;
b) preparation of an emulsion of the water-in-oil type by addition, with vigorous stirring, of a composition of oil possessing surfactant properties type to an aqueous solution of a ligand;
c) mixing the two emulsions, followed by further vigorous stirring, for a time of 1 to 10 min;
d) precipitation of the nanoparticles by addition of a solvent which does not modify the structure of the nanoparticles but which denatures the emulsion;
e) extraction of the precipitate by several "washing with said solvent/centrifuging" cycles, followed by evaporation of said solvent.

10. The process as claimed in claim 9, **characterized in that** the composition of the oil possessing surfactant properties type is a composition obtained by addition of a surfactant to an oil or a single product having both surfactant properties and oil properties.

11. The process as claimed in claim 8, **characterized in that** it comprises the following stages:

a. preparation of a microemulsion of the water-in-oil type by addition of an aqueous solution of at least one iron salt to a solution of a surfactant in an oil (n-heptane, for example) and subjecting to ultrasound until a clear solution is obtained;
b. preparation of a microemulsion of the water-in-oil type by addition of an aqueous solution of ligand to a solution of a surfactant in an oil and subjecting to ultrasound until a clear solution is obtained;
c. mixing the two microemulsions and treating the mixture with ultrasound until a clear solution is obtained;
d. precipitation of the nanoparticles by addition of a solvent which does not modify the structure of the nanoparticles but which denatures the emulsion.

12. The process as claimed in either of claims 9 or 11 for the preparation of a material composed of nanoparticles of a compound

$$\left[(Fe_{1-y}M_yL_3)_wL_3\right]\left[X_{\frac{2}{x}(1-\frac{z}{x'})}Y_{\frac{2z}{x'}}\right]_w$$

in which $y \neq 0$ and $z = 0$, **characterized in that** an aqueous solution of M salt is prepared and added to the aqueous solution of Fe salt, before bringing into contact with the "surfactant+oil" mixture.

13. The process as claimed in either of claims 9 or 11 for the preparation of a material composed of nanoparticles of a compound

$$\left[(Fe_{1-y}M_yL_3)_wL_3\right]\left[X_{\frac{2}{x}(1-\frac{z}{x'})}Y_{\frac{2z}{x'}}\right]_w$$

in which $z \neq 0$ and $y = 0$, **characterized in that** an aqueous solution comprising an Fe salt of one of the anions and an Fe salt of the other anion is prepared, before bringing into contact with the "surfactant+oil" mixture.

14. The process as claimed in either of claims 9 or 11 for the preparation of a material composed of nanoparticles of a compound

$$\left[(Fe_{1-y}M_yL_3)_wL_3\right]\left[X_{\frac{2}{x}(1-\frac{z}{x'})}Y_{\frac{2z}{x'}}\right]_w$$

in which y ≠ 0 and z ≠ 0, **characterized in that** a solution comprising at least one iron salt of one of the anions and at least one M salt of the other anion is prepared.

15. The process as claimed in either of claims 9 or 11 for the preparation of a material composed of nanoparticles of a compound

$$\left[(Fe_{1-y}M_yL_3)_w L_3\right]\left[X_{2/x(1-z/x')}Y_{2z/x'}\right]_w$$

in which the nanoparticles are coated with silica, **characterized in that** a silyl derivative is added to the reaction medium before stage d).

16. The process as claimed in claim 15, **characterized in that** the silyl derivative is tetraethoxysilane, (n-octadecyl) triethoxysilane or (n-octyl)triethoxysilane.

17. The use of a material as claimed in claim 1 as thermochromic pigment, as support for data storage, as optical limiter, or as optical gate.

18. A contrast agent for the detection of cancer cells, **characterized in that** it comprises a material as claimed in claim 1.

**Patentansprüche**

1. Material aus Nanoteilchen, die im Wesentlichen eine Verbindung der folgenden Formel umfassen

$$\left[(Fe_{1-y}M_yL_3)_w L_3\right]\left[X_{2/x(1-z/x')}Y_{2z/x'}\right]_w$$

worin:

- L für einen 1,2,4-Triazol-Liganden steht, der am Stickstoffatom an Position 4 einen Substituenten R aufweist;
- X ein Anion mit der Valenz x ist, wobei gilt: $1 \leq x \leq 2$;
- Y ein anderes Anion als X ist und die Valenz x' aufweist, wobei gilt: $1 \leq x' \leq 2$;
- R eine Alkylgruppe oder eine Gruppe $R^1R^2N-$ ist, worin $R^1$ und $R^2$ jeweils unabhängig voneinander für H oder einen Alkylrest stehen;
- M ein Metall mit der Konfiguration $3d^4$, $3d^5$, $3d^6$ oder $3d^7$ mit Ausnahme von Fe ist;
- $0 \leq y \leq 1$;
- $0 \leq z \leq 2$;
- $3 \leq w \leq 1500$.

2. Material nach Anspruch 1, **dadurch gekennzeichnet, dass** die Teilchen einen mittleren Teilchendurchmesser zwischen 1 nm und 500 nm aufweisen.

3. Material nach Anspruch 1, **dadurch gekennzeichnet, dass** R:

- eine Alkylgruppe mit 1 bis 8 Kohlenstoffatomen oder
- eine Gruppe $R^1R^2N-$ ist, worin $R^1$ und $R^2$ jeweils unabhängig voneinander für H oder eine Alkylgruppe mit 1 bis 8 Kohlenstoffatomen stehen.

4. Material nach Anspruch 1, **dadurch gekennzeichnet, dass** alle Anionen X und Y unabhängig voneinander aus $BF_4^-$, $ClO_4^-$, $Br^-$, $Cl^-$ und $NO_3^-$ oder einem aus $SO_4^{2-}$ und $CO_3^{2-}$ ausgewählten zweiwertigen Anion ausgewählt sind.

5. Material nach Anspruch 1, das einer der Formeln $Fe(L)_3(X_{2/x})_2$ und $Fe_{1-y}M_y(L)_3(X_{2/x})_2$ entspricht.

**6.** Material nach Anspruch 1, **dadurch gekennzeichnet, dass** M für Zn, Mn, Ni oder Co steht.

**7.** Material nach Anspruch 1, **dadurch gekennzeichnet, dass** die Nanokomplexteilchen mit einem Siliciumfilm überzogen sind.

**8.** Verfahren zur Herstellung eines Materials nach Anspruch 1, **dadurch gekennzeichnet, dass** eine Lösung eines Fe(II)-Salzes und gegebenenfalls eines Vorläufers des Metalls M in einem Lösungsmittel oder Lösungsmittelgemisch und eine Lösung des Liganden L in einem Lösungsmittel oder Lösungsmittelgemisch vermischt werden.

**9.** Verfahren nach Anspruch 8, **dadurch gekennzeichnet, dass** es folgende Schritte umfasst:

a) die Herstellung einer Wasser-in-Öl-Emulsion durch Zusetzen einer Zusammensetzung vom Öltyp mit oberflächenaktiven Eigenschaften unter kräftigem Rühren zu einer wässrigen Lösung zumindest eines Eisensalzes, das Ascorbinsäure enthält;
b) die Herstellung einer Wasser-in-Öl-Emulsion durch Zusetzen einer Zusammensetzung vom Öltyp mit oberflächenaktiven Eigenschaften unter kräftigem Rühren zu einer wässrigen Lösung eines Liganden;
c) das Vermischen der beiden Emulsionen, danach erneutes kräftiges Rühren für eine Zeitspanne von 1 bis 10 min;
d) das Ausfällen der Nanoteilchen durch Zusetzen eines Lösungsmittels, das die Struktur der Nanoteilchen nicht verändert, aber die Emulsion bricht;
e) das Extrahieren des Niederschlags durch mehrere Zyklen von Waschen mit dem Lösungsmittel und Zentrifugieren und anschließendes Abdampfen des Lösungsmittels.

**10.** Verfahren nach Anspruch 9, **dadurch gekennzeichnet, dass** die Zusammensetzung vom Öltyp mit oberflächenaktiven Eigenschaften eine Zusammensetzung ist, die durch Zusetzen eines oberflächenaktiven Stoffs zu einem Öl hergestellt wird, oder ein einziges Produkt ist, das gleichzeitig Eigenschaften eines oberflächenaktiven Stoffs und eines Öls aufweist.

**11.** Verfahren nach Anspruch 8, **dadurch gekennzeichnet, dass** es folgende Schritte umfasst:

a. die Herstellung einer Wasser-in-Öl-Mikroemulsion durch Zusetzen einer wässrigen Lösung zumindest eines Eisensalzes zu einer Lösung eines oberflächenaktiven Stoffs in einem Öl (wie z.B. n-Heptan) und das Aussetzen gegenüber Ultraschall bis zum Erhalt einer klaren Lösung;
b. die Herstellung einer Wasser-in-Öl-Mikroemulsion durch Zusetzen einer wässrigen Ligandenlösung zu einer Lösung eines oberflächenaktiven Stoffs in einem Öl und das Aussetzen gegenüber Ultraschall bis zum Erhalt einer klaren Lösung;
c. das Vermischen der beiden Mikroemulsionen und das Behandeln des Gemischs mit Ultraschall bis zum Erhalt einer klaren Lösung;
d. das Ausfällen der Nanoteilchen durch Zusetzen eines Lösungsmittels, das die Struktur der Nanoteilchen nicht verändert, aber die Emulsion bricht.

**12.** Verfahren nach Anspruch 9 oder 11 zur Herstellung eines Materials aus Nanoteilchen einer Verbindung der folgenden Formel

$$\left[(Fe_{1-y}M_yL_3)_w L_3\right]\left[X_{\frac{2}{x}(1-\frac{z}{x'})}Y_{\frac{2z}{x'}}\right]_w$$

worin gilt: $y \neq 0$ und $z = 0$, **dadurch gekennzeichnet, dass** eine wässrige Lösung eines Salzes von M hergestellt wird, die zu einer wässrigen Lösung eines Fe-Salzes zugesetzt wird, bevor diese mit dem Gemisch aus oberflächenaktivem Stoff und Öl in Kontakt gebracht wird.

**13.** Verfahren nach Anspruch 9 oder 11 zur Herstellung eines Materials aus Nanoteilchen einer Verbindung der folgenden Formel

$$\left[\left(\mathrm{Fe}_{1-y}\mathrm{M}_y\mathrm{L}_3\right)_w\mathrm{L}_3\right]\left[\mathrm{X}_{2/x(1-z/x')}\mathrm{Y}_{2z/x'}\right]_w$$

worin gilt: $z \neq 0$ und $y = 0$, **dadurch gekennzeichnet, dass** eine wässrige Lösung hergestellt wird, die ein Fe-Salz eines der Anionen und ein Fe-Salz des anderen Anions enthält, bevor diese mit dem "Tensid-Öl"-Gemisch kontaktiert wird.

**14.** Verfahren nach Anspruch 9 oder 11 zur Herstellung eines Materials aus Nanoteilchen einer Verbindung der folgenden Formel

$$\left[\left(\mathrm{Fe}_{1-y}\mathrm{M}_y\mathrm{L}_3\right)_w\mathrm{L}_3\right]\left[\mathrm{X}_{2/x(1-z/x')}\mathrm{Y}_{2z/x'}\right]_w$$

worin gilt: $y \neq 0$ und $y \neq 0$, **dadurch gekennzeichnet, dass** eine Lösung hergestellt wird, die zumindest ein Fe-Salz eines der Anionen und zumindest ein Salz von M des anderen Anions enthält.

**15.** Verfahren nach Anspruch 9 oder 11 zur Herstellung eines Materials aus Nanoteilchen einer Verbindung der folgenden Formel

$$\left[\left(\mathrm{Fe}_{1-y}\mathrm{M}_y\mathrm{L}_3\right)_w\mathrm{L}_3\right]\left[\mathrm{X}_{2/x(1-z/x')}\mathrm{Y}_{2z/x'}\right]_w$$

worin die Nanoteilchen mit Silicium überzogen sind, **dadurch gekennzeichnet, dass** vor Schritt d) ein Siliciumderivat zum Reaktionsmedium zugesetzt wird.

**16.** Verfahren nach Anspruch 15, **dadurch gekennzeichnet, dass** das Siliciumderivat Tetraethoxysilan, n-Octadecyltriethoxysilan oder n-Octyltriethoxysilan ist.

**17.** Verwendung eines Material nach Anspruch 1 als thermochromes Pigment, als Träger für Datenspeicher, als optischer Begrenzer oder als optisches Gate.

**18.** Kontrastmittel zur Detektion von Krebszellen, **dadurch gekennzeichnet, dass** es ein Material nach Anspruch 1 umfasst.

Fig. 1

Fig. 2

Fig. 3

Fig. 4

Fig. 5

Fig. 6

Fig. 7

$[Fe(NH_2Trz)_3](NO_3)_{1.7}(BF_4)_{0.3}$

Fig. 8

$[Fe(NH_2Trz)_3](NO_3)_2$

## Fig. 9

## Fig. 10a

**Fig. 10b**

**Fig. 10c**

**Fig. 11a**

~ 1 nm

Fig. 11b

~ 2 nm

Fig.11c

~ 3 nm

20

**EP 1 960 410 B1**